# FASCICULE DE BREVET EUROPEEN

(11) **EP 1 322 701 B1**
(45) Date de publication et mention de la délivrance du brevet: **24.11.2004**
(21) Numéro de dépôt: 01974407.7
(22) Date de dépôt: 28.09.2001
(51) Int. Cl.: C08K 5/3412

(54) **COMPOSITION RETARDANT LE GRILLAGE**
VORVERNETZUNGSHEMMENDE ZUSAMMENSETZUNG
SCORCH-DELAYING COMPOSITION

(30) Priorité: 03.10.2000 FR 0012581
(43) Date de publication de la demande: 02.07.2003
(73) Titulaire: Atofina, 92800 Puteaux (FR)
(72) Inventeur: DEBAUD, Fabien, F-69005 Lyon (FR); DEFRANCISCI, Alfredo, 69003 Lyon (FR); GUERRET, Olivier, 64230 Mazerolles (FR); KERVENNAL, Jacques, F-69005 Lyon (FR)
(86) Numéro de dépôt international: PCT/FR2001/003010
(87) Numéro de publication internationale: WO 2002/028950

(56) Documents cités:
- EP-A- 0 499 581
- EP-A- 0 870 798
- PATENT ABSTRACTS OF JAPAN vol. 1999, no. 05, 31 mai 1999 (1999-05-31) & JP 11 049865 A (NOF CORP), 23 février 1999 (1999-02-23) cité dans la demande
- PATENT ABSTRACTS OF JAPAN vol. 2000, no. 06, 22 septembre 2000 (2000-09-22) & JP 2000 072718 A (MITSUBISHI RAYON CO LTD;OSAKA ORGANIC CHEM IND LTD), 7 mars 2000 (2000-03-07)
- DATABASE WPI Section Ch, Derwent Publications Ltd., London, GB; Class A00, AN 1968-97777P XP002168780 & SU 191 779 A (KUZ'MINSKII AS (RESIN IND RES INST))

## Description

La présente invention concerne la prévention du grillage avant la réticulation d'une composition thermoplastique et/ou élastomère par les peroxydes ou les composés azoïques.

La réticulation prématurée (grillage) pendant la phase préparatoire est une difficulté majeure de l'utilisation de peroxydes et des composés azoïques dans des applications de réticulation (durcissement) des matériaux élastomères et/ou thermoplastiques. La phase préparatoire consiste en général à malaxer les constituants et éventuellement les extruder à des températures souvent élevées. Les conditions opératoires de cette phase préparatoire conduisent bien souvent à la décomposition de l'initiateur peroxydique ou azoïque induisant ainsi la réaction de réticulation avec formation de particules de gel dans la masse du mélange. La présence de ces particules de gel conduit à des imperfections (inhomogénéité, rugosité de surface) du produit final. Un grillage excessif diminue les propriétés plastiques du matériau, de sorte qu'on ne peut plus transformer celui-ci, ce qui conduit à la perte du lot entier. En outre, un grillage excessif peut conduire à l'arrêt total de l'opération d'extrusion.

Pour pallier cet inconvénient, plusieurs solutions ont été proposées. Ainsi, il a été proposé d'utiliser un initiateur ayant une demi-vie de 10 heures à température élevée. Les inconvénients de cette approche sont la faible productivité due à une longue durée de durcissement et les coûts énergétiques élevés.

Il a également été proposé d'incorporer certains additifs pour réduire la tendance au grillage. Ainsi, l'utilisation d'hydroperoxydes organiques comme inhibiteurs de grillage pour des compositions à base de polyéthylène réticulées par un peroxyde a été décrite dans le brevet britannique GB 1 535 039. L'utilisation des monomères vinyliques a fait l'objet du brevet US 3 954 907. L'utilisation de nitrites a été décrite dans le brevet US 3 202 648. Le brevet US 3 335 124 décrit l'utilisation d'amines aromatiques, de composés phénoliques, de composés mercaptothiazoles, de sulfures, d'hydroquinones et de composés dithiocarbamates de dialkyle.

Tout récemment l'emploi du 2,2,6,6 - tétraméthylpipéridinyloxy (TEMPO) et du 4-hydroxy - 2,2,6,6 - tétraméthylpipéridinyloxy (4-hydroxy TEMPO) a fait l'objet d'une demande de brevet japonais JP 11-49865.

L'emploi des additifs de l'état de la technique cité précédemment pour allonger le temps de résistance au grillage a toutefois un effet néfaste sur le temps de durcissement et/ou la densité de réticulation finale. Il conduit à une diminution de la productivité et/ou des propriétés du produit final.

La présente invention supprime les inconvénients de l'état de la technique car elle permet d'améliorer la résistance au grillage, la densité de réticulation sans que cela ait un impact négatif sur la durée de réticulation. Ceci est atteint en utilisant une famille de nitroxydes particuliers comme additif.

Un premier objet de la présente invention est donc une composition retardant le grillage comprenant un nitroxyde (N) renfermant au moins une insaturation. Comme nitroxyde (N), on peut utiliser par exemple ceux représentés par les formules suivantes : 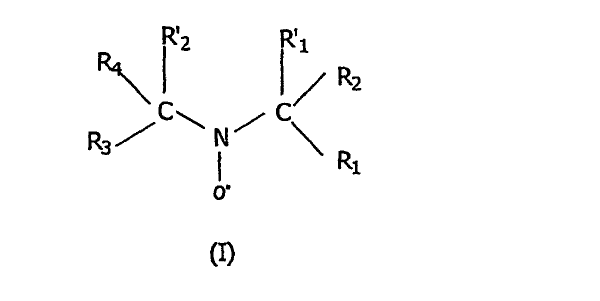 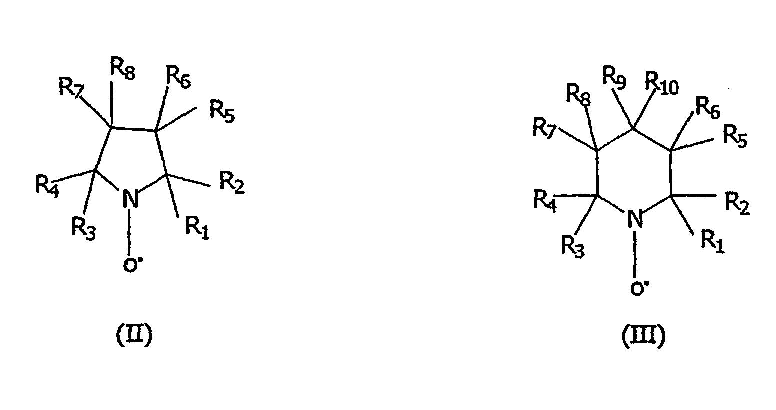 dans lesquelles au moins un des substituants R'₁, R'₂, R₁, R₂, R₃, R₄, R₅, R₆, R₇, R₈, R₉ et R₁₀ possède au moins une insaturation réactive vis-à-vis d'addition radicalaire. Les substituants restants pouvant être identiques ou différents représentent un atome d'hydrogène, un atome d'halogène tel que le fluor, le chlore, le brome ou l'iode, un groupement hydrocarboné linéaire, ramifié ou cyclique, saturé tels qu'un radical alkyle, un groupement aromatique, substitué ou non, un groupement cyano-CN, un groupement amide-CONRRₐ, un groupement ester-COOR, un groupement alcoxyle -OR, un groupement phosphonate -PO(OR)(ORₐ), un groupement hydroxyle -OH ou un groupement acide tel que -COOH ou -PO(OH)₂ ou SO₃H. R et Rₐ identiques ou différents peuvent représenter un atome d'hydrogène, un groupement alkyle linéaire, ramifié ou cyclique ayant un nombre de carbone allant de 1 à 20, un groupement phényle - éventuellement substitué.

Les substituants possédant au moins une insaturation peuvent chacun représenter notamment un groupement hydrocarboné linéaire, ramifié ou cyclique insaturé ou un groupement acrylate, méthacrylate, acrylamide et méthacrylamide. Lorsque plusieurs insaturations sont présentes sur le même groupement celles-ci peuvent être conjuguées, comme par exemple dans un groupement butadiényle ou non conjuguées.

Lorsque les formules précitées comportent en plus d'au moins un substituant possédant au moins une insaturation, un groupement hydroxy et/ou un groupement acide, le groupement hydroxyle et/ou le groupement acide est de préférence représenté par R₅, R₆, R₇, R₈, R₉ et R₁₀.

La présente invention a également pour objet une composition de réticulation (C) retardant le grillage comprenant un nitroxyde (N) et un initiateur de radicaux libres choisi dans le groupe constitué des peroxydes organiques, des composés azoïques et de leurs mélanges.

Un autre objet de l'invention est une composition réticulable (A) comprenant un polymère thermoplastique et/ou polymère élastomère pouvant être réticulés au moyen d'un peroxyde ou d'un composé azoïque, un nitroxyde (N) et un initiateur de radicaux libres choisi dans le groupe constitué des peroxydes organiques, des composés azoïques et de leurs mélanges.

La présente invention fournit également un procédé de réticulation d'une composition réticulable comprenant un polymère thermoplastique et/ou un polymère élastomère pouvant être réticulés au moyen d'un peroxyde ou d'un composé azoïque dans lequel on mélange ledit polymère avec un initiateur de radicaux libres, choisi dans le groupe constitué des peroxydes organiques, des composés azoïques et de leurs mélanges, en présence d'un nitroxyde (N).

La présente invention fournit également des objets moulés ou des extrudés tels que fils câbles électriques obtenus à partir d'une composition réticulable (A).

Selon la présente invention on utilise de préférence un nitroxyde (N) de formule (III) dans laquelle :
- R₁, R₂, R₃, R₄ pouvant être identiques ou différents représentent un radical méthyle, éthyle, propyle, isopropyle, butyle, sec-butyle ou tertiobutyle,
- R₅, R₆, R₇, R₈, R₉ représentent chacun un atome d'hydrogène et
- R₁₀ représente un groupement hydrocarboné linéaire, ramifié ou cyclique insaturé, un groupement acrylate, acrylamide, méthacrylate ou méthacrylamide.

On peut citer à titre d'exemple :
- l'aciylate de - 2, 2, 6, 6 tétraéthyl -4- pipéridinyl -oxy
- le méthacrylate de - 2, 2, 6, 6 tétraéthyl -4- pipéridinyl -oxy

On préfère utiliser, en particulier, un nitroxyde (N) renfermant une insaturation représenté par la formule (IV) : 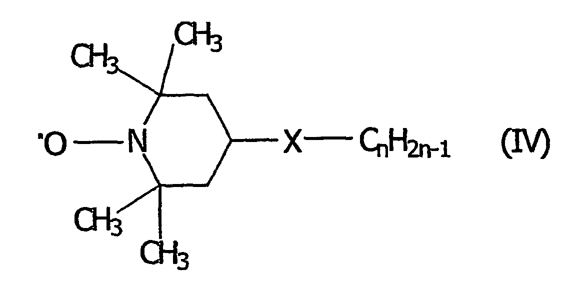 dans laquelle X représente un groupement bivalent -OC(O)-, - NR_{b}C(O)-, -P(O) (OR_{b})O- avec R_{b} ayant la même signification que R et n est un nombre entier pouvant varier de 2 à 20 et de préférence de 2 à 10. La position de l'insaturation sur le groupement CₙH₂ₙ₋₁ est indifférente mais on préfère les insaturations situées soit en position 1 par rapport à X soit en position terminale.

A titre d'exemple, on peut citer :
- l'acrylate de 2, 2, 6, 6 tétraméthyl -4- pipéridinyl -oxy
- le méthacrylate de 2, 2, 6, 6 tétraméthyl -4- pipéridinyl -oxy
- l'acrylamide de 2, 2, 6, 6 tétraméthyl -4- pipéridinyl -oxy
- le méthacrylamide de 2, 2, 6, 6 tétraméthyl -4- pipéridinyl -oxy

Selon la présente invention, on peut employer comme initiateurs de radicaux libres, des composés azoïques et/ou des peroxydes organiques qui, par décomposition thermique, produisent des radicaux libres qui facilitent la réaction de durcissement/réticulation. Parmi les initiateurs de radicaux libres utilisés comme agents de réticulation, les peroxydes de dialkyle et les diperoxycétals sont préférés. On trouvera une description détaillée de ces composés dans *Encyclopedia of Chemical Technology,* 3^{ème} édition, vol. 17, pages 27 à 90 (1982).

Parmi les peroxydes de dialkyle, les initiateurs préférés sont : peroxyde de dicumyle, peroxyde de di-t-butyle, peroxyde de t-butylcumyle, 2,5-diméthyl-2,5-di (t-butylperoxy)hexane, 2,5 diméthyl-2,5-di (t-amylperoxy) - hexane, 2,5 diméthyl-2,5-di(t-butylperoxy)hexyne-3, 2,5 diméthyl-2,5-di(t-amylperoxy)hexyne-3, α, α'-di [(t-butyl-peroxy) isopropyl]benzène, peroxyde de di-t-amyle, 1,3,5-tri [(t-butylperoxy)isopropyl]benzène, 1,3-diméthyl-3-(t-butylperoxy)butanol, 1,3-diméthyl-3-(t -amylperoxy) butanol et leurs mélanges.

Parmi les diperoxycétals, les initiateurs préférés sont : 1,1-di (t-butylperoxy)-3,3,5-triméthylcyclohexane, 1,1-di (t-butylperoxy) cyclohexane, 4,4 di (t-amylperoxy)valérate de n-butyle, 3-3-di t-butylperoxy) butyrate d'éthyle, 2,2-di (t-amylperoxy) propane, 3,6, 6, 9, 9 pentaméthyt-3-éthoxycarbonyfméthyf-1, 2, 4, 5,-tétraoxacyclononane, 4,4-bis (t-butylperoxy)valérate de n-butyle, 3,3 di(t-amylperoxy)butyrate d'éthyle et leurs mélanges.

Comme composés azoïques, on peut citer à titre d'exemple le 2,2' azobis (2-acétoxypropane), l'azobisisobutyronitrile, l'azodicarbamide, le 4,4' azobis acide cyanopentanoïque et le 2,2' azobisméthylbutyronitrile.

Le peroxyde de dicumyle et l'α, α' di [(t-butyl-peroxy)isopropyl] benzène sont particulièrement préférés.

Les polymères thermoplastiques et/ou élastomères pris en considération dans la présente invention peuvent être définis comme des polymères naturels ou synthétiques qui ont un caractère thermoplastique et/ou élastomère et qui peuvent être réticulés (durcis) sous l'action d'un agent de réticulation. Dans *Rubber World, "Elastomer Crosslinking with Diperoxyketals",* octobre 1983, pages 26-32, et dans *Rubber and Plastic News, "Organic Peroxides for Rubber Crosslinking",* 29 septembre 1980, pages 46-50, on décrit l'action de réticulation et des polymères réticulables. Des polyoléfines qui conviennent à la présente invention sont décrites dans *Modem Plastics Encyclopedia 89,* pages 63-67, 74-75. A titre d'exemple, on peut citer le polyéthylène linéaire de faible densité, le polyéthylène de faible densité, le polyéthylène de densité élevée, le polyéthylène chloré, les terpolymères d'éthylène-propylène-diène (EPDM), les copolymères d'éthylène-acétate de vinyle, les copolymères d'éthylène propylène, le caoutchouc de silicone, le polyéthylène chlorosulfoné, les fluoroélastomères, le caoutchouc naturel (NR), le polyisoprène (IR), le polybutadiène (BR), les copolymères acrylonitrile-butadiène (NBR) ou les copolymères styrène-butadiène (SBR).

On peut également citer les copolymères d'éthylène-(méth)acrylate de méthyle et les copolymères d'éthylène-méthacrylate de glycidyle.

Le rapport en poids de l'initiateur de radicaux libres au nitroxyde (N) dans la composition de réticulation (C) et dans la composition réticulable (A) est de préférence compris entre 1 et 50, et avantageusement compris entre 2 et 10.

Dans la composition réticulable (A) l'initiateur de radicaux libres représente de préférence entre 0,2 et 5 % en poids de la quantité de polymère et avantageusement entre 0,5 et 3 % en poids.

Outre les constituants précédemment cités, les compositions (A) et (C) peuvent comprendre des anti-oxydants, des stabilisants, des plastifiants et des charges inertes telles que la silice, l'argile ou le carbonate de calcium.

Les compositions (A) et (C) peuvent comprendre plusieurs nitroxyde (N). Elles peuvent également comprendre plusieurs initiateurs de radicaux libres.

Selon le procédé de la présente invention, la température de réticulation peut être comprise entre 110 et 220° C et de préférence entre 140 et 200°C.

Avantageusement, le procédé est mis en oeuvre en présence d'une quantité d'initiateur et de nitroxyde telle que les rapports en poids initiateur/polymère et nitroxyde/polymère soient voisins de la composition (A).

La transformation des compositions réticulables en objets moulés ou extrudés peut être effectuée pendant ou après la réticulation.

### PARTIE EXPERIMENTALE

Dans ce qui suit, les abréviations suivantes sont utilisées :
- M_{H} :: la valeur maximale du couple obtenu à partir de la courbe enregistrée par le rhéomètre.
Cette valeur détermine la densité de réticulation.
- T₉₀ :: temps de durcissement, temps nécessaire pour atteindre 90 % du couple maximal à une température donnée.
- Tₛ₅ :: temps de grillage, temps nécessaire à une température donnée pour que le couple augmente de 5 unités Mooney.

La densité de réticulation (M_{H}) et le temps de réticulation (t₉₀) du mélange obtenu ont été mesurés à 180°C à l'aide d'un rhéomètre Monsanto ODR 2000 E (Alpha Technologies, arc d'oscillation 3°, fréquence d'oscillation 100 cycles/min).

Le temps de réticulation est lui aussi déterminé à l'aide du rhéomètre utilisé dans les mêmes conditions que précédemment.

Le temps de grillage a été mesuré à 145°C à l'aide d'un viscosimètre Mooney MV 2000 (Alpha Technologies).

### Exemple 1 (non conforme à l'invention) :

1000 g de polyéthylène basse densité (Mitene commercialisé par Ashtand), 25 g de peroxyde de dicumyle (Luperox® DC) et 3 g de 2,2,6,6 tétraméthylpipéridinyloxy (TEMPO) ont été mélangés dans un turbo mélangeur à 80° C (température de consigne) pendant 15 minutes (vitesse d'agitation = 930 tours/min). La poudre a ensuite été transformée en échantillon sous forme de disque par fusion à 110° C pendant 3 min. L'échantillon a ensuite été placé dans la chambre de rhéomètre ou de viscosimètre.

### Exemple 2 (non conforme à l'invention) :

L'exempte 1 a été reproduit sans l'utilisation de 2,2,6,6 tétraméthylpipéridinyl -oxy. Les résultats sont donnés dans le tableau 1. La comparaison des exemples 1 et 2 montre que le temps de gnllage plus élevé avec le TEMPO est accompagné d'une diminution importante de la densité de réticulation et une légère augmentation du temps de réticulation.

### Exemple 3 :

On opère comme décrit dans l'exempte 1 sauf que l'on remplace les 3g de 2,2,6,6 tétraméthylpipéridinyloxy par 4,4g de NT1 (methacrylate 2,2,6,6 tétraméthyl - 4- pipéridinyloxy) de sorte à effectuer une comparaison à concentration équivalente de fonction nitroxyde.

La comparaison des résultats avec ceux obtenus dans les exemples précédents montrent sans ambiguïté que ce nitroxyde permet d'augmenter le temps de grillage tout en augmentant la densité de réticulation.

**Tableau 1**

| | Additif | Couple Maximal à 180°C (M_{H}) (N.m) | Temps de grillage à 145 °C (Tₛ₅) (min:s) | Temps de réticulation à 180°C (T₉₀) (min:s) |
|---|---|---|---|---|
| Exemple 1 | TEMPO | 1,21 | 19:00 | 7:10 |
| Exemple 2 | - | 1,95 | 8:40 | 6:50 |
| Exemple 3 | NT1 | 2,42 | 14:10 | 6:20 |
| Exemple 4 | - | 5,94 | 2:50 | 5:21 |
| Exemple 5 | OH-TEMPO | 5,14 | 16:19 | 5:39 |
| Exemple 6 | NT1 | 6,14 | 15:47 | 4:12 |

### Exemple 4 (non conforme à l'invention)

318g de compound EPDM DIN 7863 (contenant 100g de terpolymère d'éthylène-propylène-diène et 218g de charges) ont été conditionnés dans un mélangeur de type Banbury d'un volume de 350 cm³ à 50°C pendant 5 min à une vitesse de 50 tours/min. 8 g de Luperox F4OED (40 % de di(tert-butylperoxy isopropyl)benzène et 60% de charges inertes) ont été ajoutés et mélangés au compound pendant 5 min à 50°C à une vitesse de 50 tours/min.

### Exemple 5 (non conforme à l'invention)

On opère comme à l'exemple 4 sauf que l'on ajoute, en plus du Luperox F4OED, 0,677g de 4-hydroxy 2,2,6,6 tetraméthylpipéridinyloxy (OH-TEMPO).

### Exemple 6 :

On opère comme à l'exemple 5 sauf qu'à la place du OH-TEMPO, on ajoute 0,931 g de NT1.

## Revendications

1. Composition de réticulation retardant le grillage comprenant un nitroxyde (N) renfermant au moins une insaturation et un initiateur de radicaux libres choisi dans le groupe constitué des peroxydes organiques, des composés azoïques et de leurs mélanges.

2. Composition selon la revendication 1 **caractérisé en ce que** le nitroxyde (N) est représenté par les formules (I) à (III) dans lesquelles : 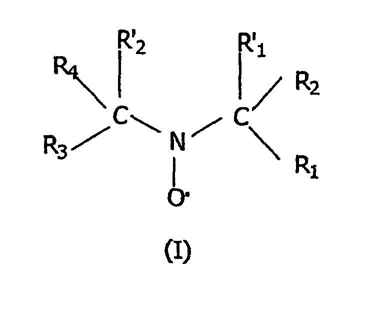 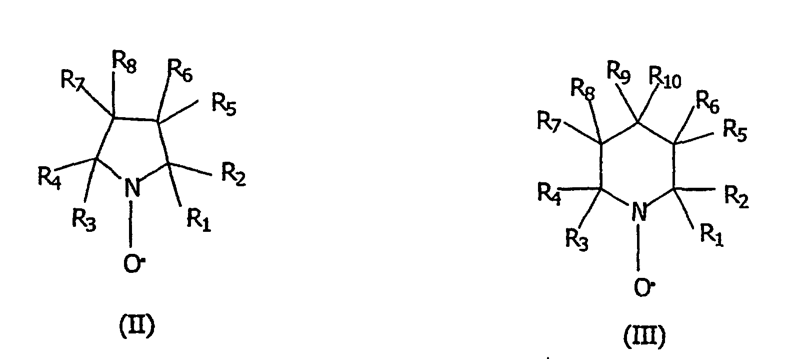 dans lesquelles au moins un des substituants R'₁, R'₂, R₁, R₂, R₃, R₄, R₅, R₆, R₇, R₈, R₉ et R₁₀ possède au moins une insaturation réactive vis-à-vis d'addition radicalaire. Les substituants restants pouvant être identiques ou différents représentent un atome d'hydrogène, un atome d'halogène tel que le fluor, le chlore, le brome ou l'iode, un groupement hydrocarboné linéaire, ramifié ou cyclique, saturé tels qu'un radical alkyle, un groupement aromatique, substitué ou non, un groupement cyano-CN, un groupement amide-CONRRₐ, un groupement ester-COOR, un groupement alcoxyle -OR, un groupement phosphonate -PO(OR)(ORₐ), un groupement hydroxyle -OH ou un groupement acide tel que -COOH ou -PO(OH)₂ ou SO₃H. R et Rₐ identiques ou différents peuvent représenter un atome d'hydrogène, un groupement alkyle linéaire, ramifié ou cyclique ayant un nombre de carbone allant de 1 à 20, un groupement phényle - éventuellement substitué.

3. Composition selon la revendication 2 **caractérisé en ce que** les substituants possédant au moins une insaturation peuvent chacun représenter un groupement hydrocarboné linéaire, ramifié ou cyclique insaturé ou un groupement acrylate, méthacrylate, acrylamide et méthacrylamide.

4. Composition selon la revendication 1 ou 2 **caractérisé en ce que** le nitroxyde (N) est représenté par la formule (IV) : 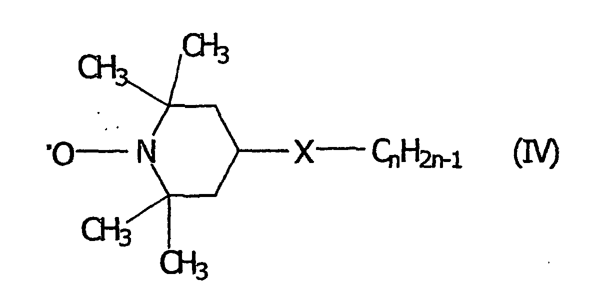 dans laquelle X représente un groupement bivalent -OC(O)-, - NR_{b}C(O)-, -P(O) (OR_{b})O- avec R_{b} ayant la même signification que R et n est un nombre entier pouvant varier de 2 à 20 et de préférence de 2 à 10.

5. Composition selon la revendication 4 **caractérisé en ce que** le nitroxyde (N) est :
- l'acrylate de 2, 2, 6, 6 tétraméthyl -4- pipéridinyl -oxy,
- le méthacrylate de 2, 2, 6, 6 tétraméthyl -4- pipéridinyl -oxy
- l'acrylamide de 2, 2, 6, 6 tétraméthyl -4- pipéridinyl -oxy, ou
- le méthacrylamide de 2, 2, 6, 6 tétraméthyl -4- pipéridinyl -oxy.

6. Composition selon l'une des revendications précédentes **caractérisée en ce que** l'initiateur de radicaux libres est le peroxyde de dicumyle ou l'α, α' di [(t-butyl-peroxy)isopropyl] benzène.

7. Composition selon l'une des revendications précédentes **caractérisée en ce qu'**elle comprend un polymère, thermoplastique et/ou un polymère élastomère.

8. Composition selon la revendication 7 **caractérisée en ce que** le polymère est choisi parmi le polyéthylène de faible densité, le polyéthylène de densité élevée, le polyéthylène chloré, les terpolymères d'éthylène-propylène-butadiène, les copolymères d'éthylène-acétate de vinyle, les copolymères d'éthylène propylène, le caoutchouc de silicone, le polyéthylène chlorosulfoné, les fluoroélastomères, les copolymères d'éthylène-(méth)acrylate de méthyle et les copolymères d'éthylène-méthacrylate de glycidyle.

9. Composition selon l'une quelconque des revendications précédentes **caractérisé en ce que** le rapport en poids de l'initiateur de radicaux libres au nitroxyde (N) est compris entre 1 et 50, de préférence compris entre 2 et 10.

10. Composition selon l'une quelconque des revendications 7 à 9 **caractérisé en ce que** l'initiateur de radicaux libres représente entre 0,2 et 5% en poids de la quantité de polymère, de préférence entre 0,5 et 3 % en poids.

11. Procédé de réticulation d'une composition réticulable comprenant un polymère thermoplastique et/ou un polymère élastomère pouvant être réticulés au moyen d'un peroxyde ou d'un composé azoïque **caractérisé en ce que** l'on mélange ledit polymère avec un initiateur de radicaux fibres, choisi dans le groupe constitué des peroxydes organiques, des composés azoïques et de leurs mélanges, en présence d'un nitroxyde (N) selon l'une des revendications 1 à 5.

12. Procédé selon la revendication 11 **caractérisée en ce que** la transformation de la composition réticulable (A) en objets moulés ou extrudés est effectuée pendant ou après la réticulation.

13. Objets moulés ou extrudés susceptibles d'être obtenus selon la revendication 12.

## Patentansprüche

1. Die Vorvernetzung verzögernde Vernetzungszusammensetzung, die ein Nitroxid (N), das mindestens eine Ungesättigtheit enthält, und einen Radikalinitiator umfasst, der aus der Gruppe ausgewählt ist, die aus organischen Peroxiden, Azoverbindungen und ihren Gemischen besteht.

2. Zusammensetzung nach Anspruch 1, **dadurch gekennzeichnet, dass** das Nitroxid (N) durch die folgenden Formeln (I) bis (III) dargestellt wird: 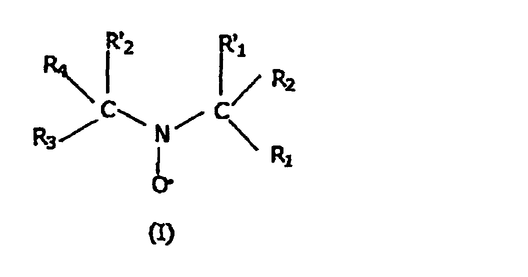 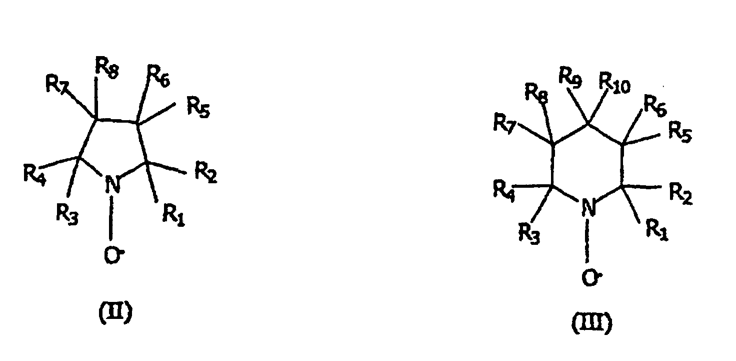 wobei mindestens einer der Substituenten R'₁, R'₂, R₁, R₂, R₃, R₄, R₅, R₆, R₇, R₈, R₉ und R₁₀ mindestens eine Ungesättigtheit besitzt, die mittels einer Radikaladdition umgesetzt werden kann. Die verbleibenden Substituenten können gleich oder verschieden sein und stellen ein Wasserstoffatom, ein Halogenatom, wie Fluor, Chlor, Brom oder Iod, einen geraden, verzweigten oder cyclischen gesättigten Kohlenwasserstoffrest, wie einen Alkylrest, einen substituierten oder nicht substituierten aromatischen Rest, eine Cyanogruppe - CN, einen Amidrest -CONRRₐ, einen Esterrest -COOR, einen Alkoxylrest -OR, einen Phosphonatrest - PO(OR)(ORₐ), eine Hydroxylgruppe -OH oder eine Säuregruppe, wie -COOH oder -PO(OH)₂ oder SO₃H dar. R und Ra sind gleich oder verschieden und können ein Wasserstoffatom, einen geraden, verzweigten oder cyclischen Alkylrest mit einer Kohlenstoffanzahl von 1 bis 20, eine gegebenenfalls substituierte Phenylgruppe darstellen.

3. Zusammensetzung nach Anspruch 2, **dadurch gekennzeichnet, dass** die Substituenten, die mindestens eine Ungesättigtheit besitzen, jeweils einen geraden, verzweigten oder cyclischen ungesättigten Kohlenwasserstoffrest oder eine Acrylat-, Methacrylat-, Acrylamid- und Methacrylamidgruppe darstellen können.

4. Zusammensetzung nach Anspruch 1 oder 2, **dadurch gekennzeichnet, dass** das Nitroxid (N) durch die folgende Formel (IV) dargestellt wird: 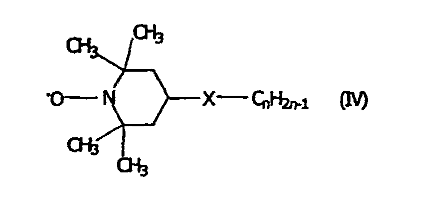 wobei X einen zweiwertigen Rest -OC(O)-, -NR_{b}C(O)-, - P (O) (OR_{b}) O- darstellt, wobei R_{b} die gleiche Bedeutung wie R hat und n eine ganze Zahl ist, die von 2 bis 20 und vorzugsweise von 2 bis 10 variieren kann.

5. Zusammensetzung nach Anspruch 4, **dadurch gekennzeichnet, dass** das Nitroxid (N) folgendes ist:
- 2,2,6,6-Tetramethyl-4-piperidinyloxyacrylat,
- 2,2,6,6-Tetramethyl-4-piperidinyloxymethacrylat,
- 2,2,6,6-Tetramethyl-4-piperidinyloxyacrylamid
oder
- 2, 2, 6, 6-Tetramethyl-4-piperidinyloxymethacrylamid.

6. Zusammensetzung nach einem der vorstehenden Ansprüche, **dadurch gekennzeichnet, dass** der Radikalinitiator Dicumylperoxid oder α,α'-Di-[(t-butylperoxy)isopropyl]benzol ist.

7. Zusammensetzung nach einem der vorstehenden Ansprüche, **dadurch gekennzeichnet, dass** sie ein thermoplastisches Polymer und/oder ein elastomeres Polymer umfasst.

8. Zusammensetzung nach Anspruch 7, **dadurch gekennzeichnet, dass** das Polymer aus Polyethylen niedriger Dichte, Polyethylen höherer Dichte, chloriertem Polyethylen, Ethylen-Propylen-Butadien-Terpolymeren, Ethylen-Vinylacetat-Copolymeren, Ethylen-Propylen-Copolymeren, Silikonkautschuk, chlorsulfoniertem Polyethylen, Fluorelastomeren, Ethylen-Methyl(meth)acrylat-Copolymeren und Ethylen-Glycidylmethacrylat-Copolymeren ausgewählt ist.

9. Zusammensetzung nach einem der vorstehenden Ansprüche, **dadurch gekennzeichnet, dass** das Gewichtsverhältnis des Radikalinitiators zu dem Nitroxid (N) zwischen 1 und 50, vorzugsweise zwischen 2 und 10, liegt.

10. Zusammensetzung nach einem der Ansprüche 7 bis 9, **dadurch gekennzeichnet, dass** der Radikalinitiator zwischen 0,2 und 5%, bezogen auf das Gewicht der Polymermenge, vorzugsweise zwischen 0,5 und 3 Gew.-%, ausmacht.

11. Verfahren zur Vernetzung einer vernetzbaren Zusammensetzung, die ein thermoplastisches Polymer und/oder ein elastomeres Polymer umfasst, die mithilfe eines Peroxids oder einer Azoverbindung vernetzt werden können, **dadurch gekennzeichnet, dass** das Polymer mit dem Radikalinitiator, der aus der Gruppe ausgewählt ist, die aus organischen Peroxiden, Azoverbindungen und ihren Gemischen besteht, in Gegenwart eines Nitroxids (N) nach einem der Ansprüche 1 bis 5 gemischt wird.

12. Verfahren nach Anspruch 11, **dadurch gekennzeichnet, dass** die Umwandlung der vernetzbaren Zusammensetzung (A) in geformte oder extrudierte Gegenstände während oder nach der Vernetzung durchgeführt wird.

13. Geformte oder extrudierte Gegenstände, die gemäß Anspruch 12 erhalten werden können.

## Claims

1. Scorch-retardant crosslinking composition comprising a nitroxide (N) containing at least one unsaturation and a free-radical initiator chosen from the group consisting of organic peroxides and azo compounds, and mixtures thereof.

2. Composition according to Claim 1, **characterized in that** the nitroxide (N) is represented by formulae (I) to (III): 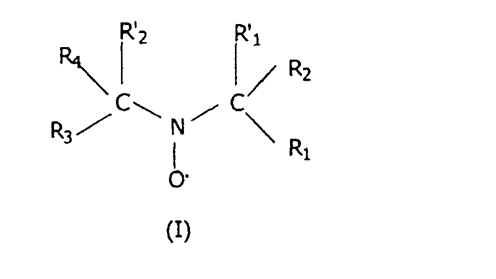 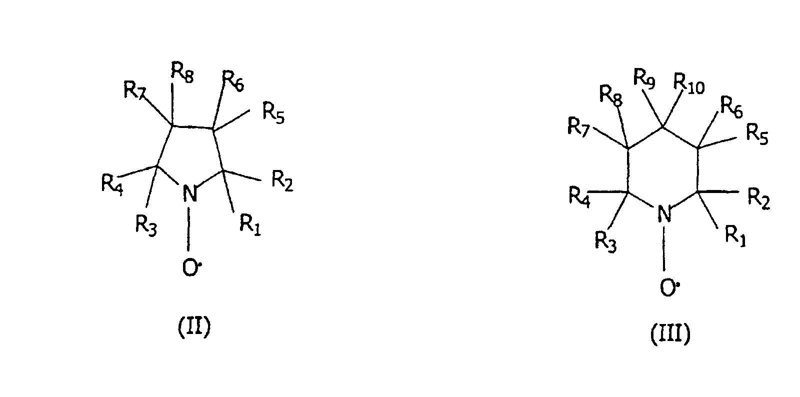 in which at least one of the substituents R'₁, R'₂, R₁, R₂, R₃, R₄, R₅, R₆, R₇, R₈, R₉ and R₁₀ contains at least one unsaturation which is reactive towards free-radical addition; the remaining substituents, which may be identical or different, represent a hydrogen atom, a halogen atom such as fluorine, chlorine, bromine or iodine, a linear, branched or cyclic, saturated hydrocarbon-based group such as an alkyl radical, a substituted or unsubstituted aromatic group, a cyano group -CN, an amide group -CONRRₐ, an ester group -COOR, an alkoxy group -OR, a phosphonate group -PO (OR) (ORₐ), a hydroxyl group -OH or an acid group such as -COOH or - PO (OH) ₂ or SO₃H; R and Rₐ, which may be identical or different, may represent a hydrogen atom, a linear, branched or cyclic alkyl group containing a number of carbons ranging from 1 to 20, or an optionally substituted phenyl group.

3. Composition according to Claim 2, **characterized in that** the substituents containing at least one unsaturation may each represent a linear, branched or cyclic unsaturated hydrocarbon-based group or an acrylate, methacrylate, acrylamide or methacrylamide group.

4. Composition according to Claim 1 or 2, **characterized in that** the nitroxide (N) is represented by formula (IV): 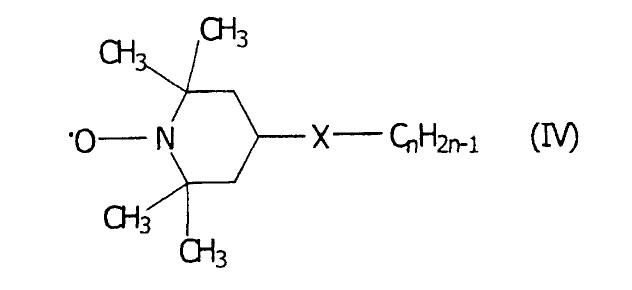 in which X represents a divalent group - OC ( O ) - , -NR_{b}C ( O ) - or -P (O) (OR_{b}) O- with R_{b} having the same meaning as R and n is an integer which may range from 2 to 20 and preferably from 2 to 10.

5. Composition according to Claim 4, **characterized in that** the nitroxide (N) is:
- 2,2,6,6-tetramethyl-4-piperidyloxy acrylate
- 2,2,6,6-tetramethyl-4-piperidyloxy methacrylate
- 2,2,6,6-tetramethyl-4-piperidyloxyacrylamide or
- 2, 2, 6, 6-tetramethyl-4-piperidyloxymethacrylamide.

6. Composition according to one of the preceding claims, **characterized in that** the free-radical initiator is dicumyl peroxide or (α,α'-di[(t-butylperoxy)isopropyl]benzene.

7. Composition according to one of the preceding claims, **characterized in that** it comprises a thermoplastic polymer and/or an elastomeric polymer.

8. Composition according to Claim 7, **characterized in that** the polymer is chosen from low density polyethylene, high density polyethylene, chlorinated polyethylene, ethylene-propylene-butadiene terpolymers, ethylene-vinyl acetate copolymers, ethylene-propylene copolymers, silicone rubber, chlorosulphonated polyethylene, fluoroelastomers, ethylene-methyl (meth)acrylate copolymers and ethylene-glycidyl methacrylate copolymers.

9. Composition according to any one of the preceding claims, **characterized in that** the weight ratio of the free-radical initiator to the nitroxide (N) is between 1 and 50 and preferably between 2 and 10.

10. Composition according to any one of Claims 7 to 9, **characterized in that** the free-radical initiator represents between 0.2% and 5% by weight of the amount of polymer and preferably between 0.5% and 3% by weight.

11. Process for crosslinking a crosslinkable composition comprising a thermoplastic polymer and/or an elastomeric polymer which may be crosslinked by means of a peroxide or an azo compound, **characterized in that** the said polymer is mixed with a free-radical initiator chosen from the group consisting of organic peroxides and azo compounds, and mixtures thereof, in the presence of a nitroxide (N) according to one of Claims 1 to 5.

12. Process according to Claim 11, **characterized in that** the conversion of the crosslinkable composition (A) into moulded or extruded articles is carried out during or after crosslinking.

13. Moulded or extruded articles which may be obtained according to Claim 12.
